# EUROPÄISCHE PATENTANMELDUNG

(11) **EP 4 760 439 A1**
(43) Veröffentlichungstag der Anmeldung: **17.06.2026**
(21) Anmeldenummer: 25214846.5
(22) Anmeldetag: 11.11.2025
(51) Int. Cl.: G05D 1/633, G05D 1/243, G05D 1/622, B66F 9/06, G05D 105/28, G05D 107/70, G05D 109/10, G05D 111/10, G05D 101/15

(54) **VORRICHTUNG UND SYSTEM ZUM STEUERN VON TRANSPORTROBOTERN**

(30) Priorität: 16.12.2024 DE 102024137857
(71) Anmelder: STILL GmbH, 22113 Hamburg (DE)
(72) Erfinder: Howey, Ansgar, 22926 Ahrensburg (DE); Hindemith, Lukas, 21244 Buchholz (DE); Rudall, Yan, 25337 Elmshorn (DE); Koenig, Ralf, 21365 Adendorf (DE)
(74) Vertreter: Patentship Patentanwaltgesellschaft

(57) **Zusammenfassung**

Die Erfindung betrifft eine Datenverarbeitungsvorrichtung (110) zum Steuern eines Transportroboters (120a), insbesondere Flurförderzeugs (120a). Die Datenverarbeitungsvorrichtung (110) umfasst eine Kommunikationsschnittstelle (113), welche ausgebildet ist, eine Vielzahl von Sensordaten zu empfangen, welche Informationen über die aktuelle Umgebung des Transportroboters (120a) enthalten. Ferner umfasst die Datenverarbeitungsvorrichtung (110) eine Prozessoreinrichtung (111), welche ausgebildet ist, auf der Grundlage der Vielzahl von Sensordaten für eine Vielzahl von Objekten (120b, 140, 160, 170) in der Umgebung des Transportroboters (120a) eine Position und eine Objektklasse zu bestimmen, wobei die Vielzahl von Objekten (120b, 140, 160, 170) wenigstens ein mobiles Objekt umfasst, und auf der Grundlage der jeweiligen Position und der jeweiligen Objektklasse der Vielzahl von Objekten (120b, 140, 160, 170) in der Umgebung des Transportroboters (120a) für das wenigstens eine mobile Objekt der Vielzahl von Objekten (120b, 140, 160, 170) eine Bewegungstrajektorie (128b) vorherzusagen. Die Prozessoreinrichtung (111) ist ferner ausgebildet, auf der Grundlage der vorhergesagten Bewegungstrajektorie (128b) des wenigstens einen mobilen Objekts eine Bewegungstrajektorie (128a) des Transportroboters (120a) zu generieren oder anzupassen.

## Beschreibung

Die Erfindung betrifft eine Vorrichtung und ein System zum automatisierten Steuern von Transportrobotern, insbesondere von zumindest teilautomatisierten Flurförderzeugen, in der Intralogistik, beispielsweise in einem Warenlager.

**In** der Intralogistik werden für den Transport und die Lagerung von Produkten, Waren und Materialien oftmals Verpackungen und/oder Ladungsträger, beispielsweise Gitterboxen oder Paletten, insbesondere Europaletten, verwendet. Zur Handhabung derartiger Verpackungen und/oder Ladungsträger in der Intralogistik, d.h. dem innerbetrieblichen Materialfluss, z.B. in einem Warenlager, werden Transportroboter (auch als AMRs bezeichnet, was für "Autonomous Mobile Robots" steht), insbesondere automatisierte Flurförderzeuge, z.B. Gabelstapler eingesetzt.

Ein Warenlager ist in der Regel ein sehr dynamisches Umfeld, in dem die teilautomatisierte oder vollautomatisierte Steuerung der mobilen Flurförderzeuge ein komplexes Problem darstellt. Im Bereich Pfadplanung für freie Navigation ist es bekannt, suchbasierte Algorithmen einzusetzen, die grundlegend in einem einer statischen Umgebungskarte planen. Diese Karte kann händisch erstellt (eher selten eingesetzt) oder durch sensorische Mittel (der Regelfall) erstellt sein, wobei eine händische Nachbearbeitung der sensorisch erfassten Daten ebenfalls üblich ist. Die statische Karte stellt somit den im Nominalfall vorhandenen Raum dar. Erweitert wird das Umgebungsmodell von einer dynamischen Karte, in der zeitveränderliche Hindernisse repräsentiert sind. Üblicherweise wird diese durch Konturdaten aus in der Regel distanzmessenden Sensoren wie Lidar, Ultraschall, Radar erstellt.

Bei Begegnungen mit dynamischen, d.h. mobilen Objekten (Fußgängern, manuell geführten Fahrzeugen) wird die Planung der Route des Transportroboters oft nicht der zukünftigen Route des Objektes angepasst. Dadurch kann es zu Konflikten im Fahrweg kommen, die vermeidbar wären. Beispielsweise können sich Fahrwege (hierin auch als Bewegungstrajektorien bezeichnet) in der näheren Zukunft kreuzen, so dass der Transportroboter versucht, in die Richtung auszuweichen, in der sich der andere Verkehrsteilnehmer bewegt, wodurch es zu einer konkurrierenden Bahnplanung kommen kann. Transportroboter bzw. AMRs, die sich nicht vorrausschauend bewegen, werden oft als ignorant und egoistisch wahrgenommen, was eine geringere Akzeptanz zur Folge hat, da das Bewegungsverhalten von Transportrobotern bzw. AMRs schlecht für menschliche Verkehrsteilnehmer lesbar, d.h. erkennbar ist. Überdies ist der Verkehrsfluss stockend und weniger effektiv als möglich wäre, wenn die Bewegungstrajektorien von Transportrobotern nicht vorrauschauend geplant werden.

Vor diesem Hintergrund liegt der vorliegenden Erfindung die Aufgabe zu Grunde, eine verbesserte Vorrichtung sowie ein verbessertes System zum automatisierten Steuern von Transportrobotern, insbesondere von zumindest teilautomatisierten bzw. zumindest teilautonomisierten Flurförderzeugen, in der Intralogistik, beispielsweise in einem Warenlager, bereitzustellen. Die automatisierten bzw. teilautomatisierten Flurförderzeuge können auch über autonome bzw. teilautonome Eigenschaften verfügen.

Diese Aufgabe wird gemäß einem ersten Aspekt der Erfindung durch eine nachstehend näher beschriebene Datenverarbeitungsvorrichtung zum Steuern von Transportrobotern, insbesondere von zumindest teilautomatisierten Flurförderzeugen, in der Intralogistik, beispielsweise in einem Warenlager gelöst. Die Datenverarbeitungsvorrichtung gemäß dem ersten Aspekt kann als eine externe Servervorrichtung ausgebildet sein, welche mit einer Vielzahl von Transportrobotern kommuniziert, oder als eine Steuervorrichtung, welche Teil eines Transportroboters ist.

Die Datenverarbeitungsvorrichtung gemäß dem ersten Aspekt umfasst eine Kommunikationsschnittstelle, welche ausgebildet ist, eine Vielzahl von Sensordaten zu empfangen, welche Informationen über die aktuelle Umgebung des Transportroboters enthalten. **In** einer Ausführungsform können die Sensordaten insbesondere in der Umgebung des Transportroboters erfasste Bilddaten oder Radar- bzw. Lidar-Daten umfassen.

Ferner umfasst die Datenverarbeitungsvorrichtung gemäß dem ersten Aspekt eine Prozessoreinrichtung, welche ausgebildet ist, auf der Grundlage der Vielzahl von Sensordaten für eine Vielzahl von Objekten in der Umgebung des Transportroboters eine Position und eine Objektklasse einer Vielzahl von Objektklassen zu bestimmen, wobei die Vielzahl von Objekten wenigstens ein mobiles Objekt umfasst. Mit anderen Worten: die Prozessoreinrichtung ist ausgebildet, auf der Grundlage der Sensordaten ein semantisches Umgebungsmodell des Transportroboters zu erstellen, welches die jeweilige Position und die jeweilige Objektklasse der Objekte in der Umgebung des Transportroboters beschreibt. Die Prozessoreinrichtung der Datenverarbeitungsvorrichtung gemäß dem ersten Aspekt ist ferner ausgebildet, auf der Grundlage der jeweiligen Position und der jeweiligen Objektklasse der Vielzahl von Objekten in der Umgebung des Transportroboters, für das wenigstens eine mobile Objekt der Vielzahl von Objekten eine Bewegungstrajektorie vorherzusagen, d.h. zu bestimmen. Die Prozessoreinrichtung der Datenverarbeitungsvorrichtung gemäß dem ersten Aspekt ist ferner ausgebildet, auf der Grundlage der vorhergesagten Bewegungstrajektorie des wenigstens einen mobilen Objekts eine Bewegungstrajektorie des Transportroboters zu generieren oder anzupassen. In einer Ausführungsform kann die Prozessoreinrichtung der Datenverarbeitungsvorrichtung gemäß dem ersten Aspekt ausgebildet sein, auf der Grundlage der jeweiligen Position und der jeweiligen Objektklasse der Vielzahl von Objekten in der Umgebung des Transportroboters, für das wenigstens eine mobile Objekt mehrere mögliche Bewegungstrajektorien zu bestimmen.

Gemäß einer Ausführungsform ist für das wenigstens eine mobile Objekt der Vielzahl von Objekten ein Schutzraum definiert, der von der Objektklasse abhängt, wobei die Prozessoreinrichtung der Datenverarbeitungsvorrichtung gemäß dem ersten Aspekt ausgebildet ist, die Bewegungstrajektorie des Transportroboters auf der Grundlage der vorhergesagten Bewegungstrajektorie des wenigstens einen mobilen Objekts derart zu generieren oder anzupassen, dass der Transportroboter nicht in den Schutzraum des wenigstens einen mobilen Objekts eindringt, wenn sich das wenigstens eine mobile Objekt gemäß der vorhergesagten Bewegungstrajektorie bewegt und sich der Transportroboter gemäß der generierten oder angepassten Bewegungstrajektorie bewegt.

**In** einer Ausführungsform ist die Prozessoreinrichtung der Datenverarbeitungsvorrichtung gemäß dem ersten Aspekt ausgebildet, für eine Vielzahl von zukünftigen Zeitpunkten an einer Vielzahl von Stellen, d.h. Punkten in der Umgebung des Transportroboters eine jeweilige Aufenthaltswahrscheinlichkeit des wenigstens einen mobilen Objekts der Vielzahl von Objekten zu bestimmen, um für das wenigstens eine mobile Objekt der Vielzahl von Objekten die Bewegungstrajektorie(n) vorherzusagen.

Gemäß einer Ausführungsform ist die Prozessoreinrichtung der Datenverarbeitungsvorrichtung gemäß dem ersten Aspekt ausgebildet, für das wenigstens eine mobile Objekt der Vielzahl von Objekten ein mit der Objektklasse des wenigstens einen mobilen Objekts verknüpftes Objektverhaltensmodell einer Vielzahl von Objektverhaltensmodellen zu ermitteln und mit dem Objektverhaltensmodell, welches als probabilistisches Verhaltensmodell ausgebildet sein kann, für die Vielzahl von zukünftigen Zeitpunkten an der Vielzahl von Stellen in der Umgebung des Transportroboters die jeweilige Aufenthaltswahrscheinlichkeit des wenigstens einen mobilen Objekts der Vielzahl von Objekten zu bestimmen.

In einer Ausführungsform ist die Prozessoreinrichtung der Datenverarbeitungsvorrichtung gemäß dem ersten Aspekt ausgebildet, auf der Grundlage der vorhergesagten Bewegungstrajektorie(n) des wenigstens einen mobilen Objekts die Bewegungstrajektorie des Transportroboters unter Verwendung einer Kostenfunktion zu generieren oder anzupassen, wobei die Kostenfunktion auf den Aufenthaltswahrscheinlichkeiten des wenigstens einen mobilen Objekts der Vielzahl von Objekten für die Vielzahl von Zeitpunkten an der Vielzahl von Stellen, d.h. Punkten in der Umgebung des Transportroboters basiert.

Gemäß einer Ausführungsform umfasst die Vielzahl von Objekten wenigstens ein immobiles, d.h. ortsfestes Objekt, wobei für das wenigstens eine immobile Objekt ein Schutzabstand definiert ist, der von der Objektklasse abhängt, und wobei die Prozessoreinrichtung der Datenverarbeitungsvorrichtung gemäß dem ersten Aspekt ausgebildet ist, die Bewegungstrajektorie des Transportroboters derart zu generieren oder anzupassen, dass, wenn sich der Transportroboter gemäß der generierten oder angepassten Bewegungstrajektorie bewegt, der Abstand zwischen dem wenigstens einen immobilen Objekt und dem Transportroboter nicht kleiner als der Schutzabstand ist.

In einer Ausführungsform ist die Prozessoreinrichtung der Datenverarbeitungsvorrichtung gemäß dem ersten Aspekt ausgebildet, auf der Grundlage der Vielzahl von Sensordaten für das wenigstens eine mobile Objekt der Vielzahl von Objekten in der Umgebung des Transportroboters ferner eine Orientierung des wenigstens einen mobilen Objekts der Vielzahl von Objekten zu bestimmen, wobei die Prozessoreinrichtung ausgebildet ist, auf der Grundlage der jeweiligen Position, der jeweiligen Orientierung und der jeweiligen Objektklasse der Vielzahl von Objekten in der Umgebung des Transportroboters, für das wenigstens eine mobile Objekt der Vielzahl von Objekten die Bewegungstrajektorie(n) vorherzusagen, d.h. zu bestimmen.

Gemäß einer Ausführungsform ist die Prozessoreinrichtung der Datenverarbeitungsvorrichtung gemäß dem ersten Aspekt ausgebildet, auf der Grundlage der Objektklasse für das wenigstens eine mobile Objekt der Vielzahl von Objekten einen oder mehrere Point-of-Interests, POls, zu bestimmen, um für das wenigstens eine mobile Objekt der Vielzahl von Objekten die Bewegungstrajektorie(n) vorherzusagen.

**In** einer Ausführungsform kann das wenigstens eine mobile Objekt der Vielzahl von Objekten ein weiterer Transportroboter sein, wobei die Prozessoreinrichtung ausgebildet ist, für den weiteren Transportroboter einen Transportauftrag zu ermitteln, um für den weiteren Transportroboter die Bewegungstrajektorie vorherzusagen. Beispielsweise kann die Datenverarbeitungsvorrichtung ausgebildet sein, den Transportauftrag von einem Warenmanagementsystem zu erhalten.

Gemäß einer Ausführungsform umfasst die Vielzahl von Objekten in der Umgebung des Transportroboters wenigstens ein Markierungsobjekt, insbesondere eine Bodenmarkierung, wobei das wenigstens eine Markierungsobjekt eine Schutzzone in der Umgebung des Transportroboters definiert.

**In** einer Ausführungsform ist die Kommunikationsschnittstelle der Datenverarbeitungsvorrichtung gemäß dem ersten Aspekt ausgebildet, die generierte oder angepasste Bewegungstrajektorie des Transportroboters repräsentierende Informationen oder ein auf der generierten oder angepassten Bewegungstrajektorie des Transportroboters basierendes Steuersignal zum Steuern des Transportroboters gemäß der generierten oder angepassten Bewegungstrajektorie an den Transportroboter zu übertragen.

Gemäß einem zweiten Aspekt der Erfindung wird ein Transportroboter bereitgestellt, wobei der Transportroboter eine Datenverarbeitungsvorrichtung gemäß dem ersten Aspekt der Erfindung umfasst.

In einer Ausführungsform ist der Transportroboter gemäß dem zweiten Aspekt als Flurförderzeug, insbesondere als Gabelstapler, zum Transport von Warenobjekten ausgebildet.

Gemäß einem dritten Aspekt der Erfindung wird ein System zum Betreiben einer Vielzahl von Transportrobotern bereitgestellt, wobei das System eine Vielzahl von Transportrobotern und eine Datenverarbeitungsvorrichtung gemäß dem ersten Aspekt der Erfindung zum Steuern der Vielzahl von Transportrobotern umfasst.

In einer Ausführungsform umfasst die Vielzahl von Transportrobotern eine Vielzahl von Sensoreinheiten, welche ausgebildet sind, zumindest einen Teil der Vielzahl von Sensordaten zu erfassen.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Datenverarbeitungsvorrichtung zum Steuern einer Vielzahl von Transportrobotern beispielsweise zum Transport von Warenobjekten in einem Warenlager gemäß einer Ausführungsform;
Figur 2 eine schematische Darstellung eines Transportroboters in Form eines Flurförderzeugs zum Transport von Warenobjekten in einem Warenlager gemäß einer Ausführungsform;
Figur 3 eine schematische Darstellung eines Transportroboters mit einer stehenden Person und einer sich bewegenden Person in der Umgebung des Transportroboters gemäß einer Ausführungsform;
Figur 4 eine schematische Darstellung mit einer sich gerade bewegenden Person und einer sich entlang einer Abzweigung bewegenden Person in der Umgebung eines Transportroboters gemäß einer Ausführungsform;
Figur 5 eine schematische Darstellung einer Fahrspur mit einer Schutzzone in der Umgebung eines Transportroboters gemäß einer Ausführungsform; und
Figur 6 eine schematische Darstellung einer Fahrspur mit einer durch eine Bodenmarkierung definierte Schutzzone in der Umgebung eines Transportroboters gemäß einer Ausführungsform.

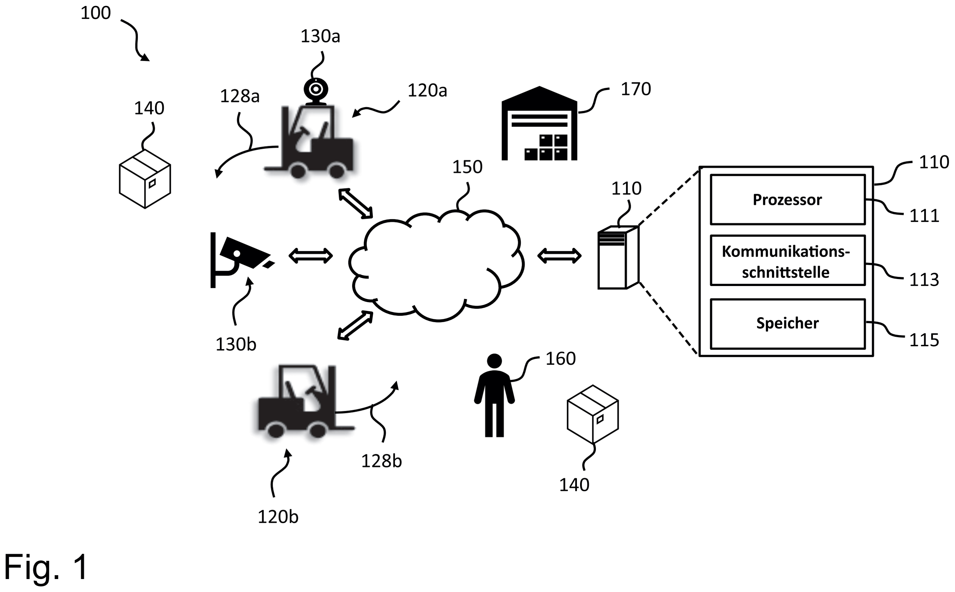

Figur 1 zeigt eine schematische Darstellung eines erfindungsgemäßen Systems 100 mit einer erfindungsgemäßen Datenverarbeitungsvorrichtung 110 zum Steuern einer Vielzahl von zumindest teilweise automatisiert betreibbaren Transportrobotern (hierein auch als AMRs bezeichnet) 120a,b in Form von mobilen Flurförderzeugen 120a,b, beispielsweise einem Gabelstapler, einem Kommissionierfahrzeug oder einem Picker in einem industriellen Umfeld, insbesondere in einem Warenlager mit einer Vielzahl von Warenobjekten 140, beispielsweise Paletten. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 1 dargestellt, umfasst die Datenverarbeitungsvorrichtung 110 einen Prozessor 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von dem Prozessor 111 der Datenverarbeitungsvorrichtung 110 ausgeführt, den Prozessor 111 veranlasst, die im Folgenden beschriebenen Funktionen, Operationen und Verfahren durchzuführen.

Wie in Figur 1 dargestellt, umfasst das System 100 ferner eine Vielzahl von Sensoren 130a,b, welche ausgebildet sind, Sensordaten in dem Warenlager und der Umgebung der Vielzahl von Transportrobotern 120a,b, insbesondere mobilen Flurförderzeugen 120a,b zu erfassen und an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager und/oder an der Vielzahl von mobilen Flurförderzeugen 120a und/oder Transportrobotern angebracht sind. Alternativ oder zusätzlich können die Vielzahl von Sensoren z.B. an den Flurförderzeugen montierte Radar- und/oder Lidar-Sensoren umfassen.

**In** einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den Transportrobotern bzw. mobilen Flurförderzeugen 120a,b und/oder zu kommunizieren. Beispielsweise kann die Kommunikationsschnittstelle 113 der Datenverarbeitungsvorrichtung 110 ausgebildet sein, über ein Kommunikationsnetzwerk, z.B. ein WLAN, 5G-Netzwerk, 6G-Netzwerk und/oder das Internet 150 die Vielzahl von Sensordaten von den Sensoren 130a,b zu empfangen und/oder mit den Transportrobotern bzw. mobilen Flurförderzeugen 120a,b zu kommunizieren, um Daten auszutauschen.

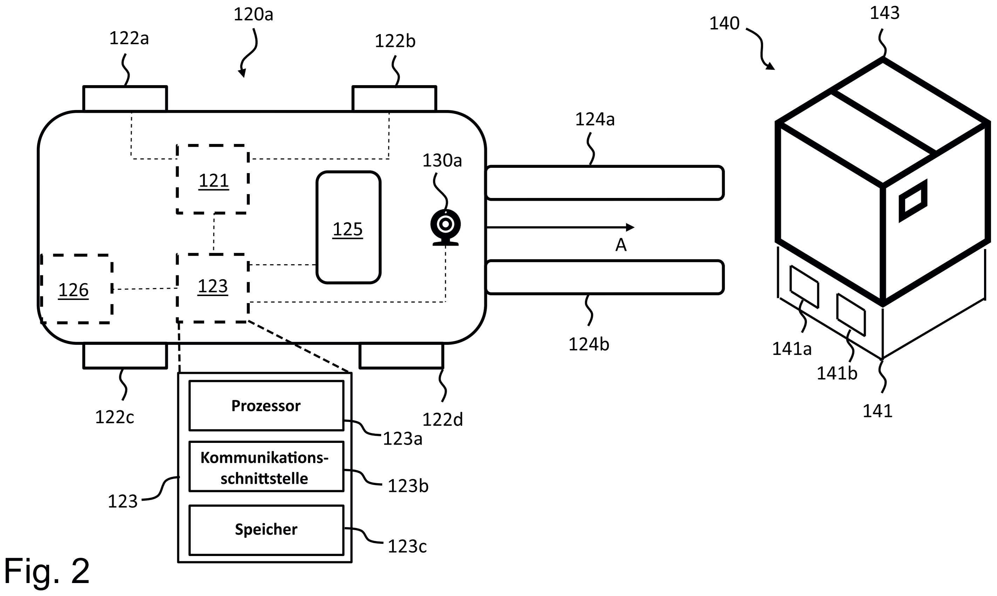

Figur 2 zeigt eine schematische Darstellung eines Transportroboters bzw. AMRs 120a in Form eines Flurförderzeugs 120a gemäß einer Ausführungsform zum Transportieren von Warenobjekten 140 in einem industriellen Umfeld, insbesondere einem Warenlager. Bei dem Transportroboter 120a in Form eines Flurförderzeugs 120a kann es sich insbesondere um einen zeitweise autonom, teil-autonom und/oder manuell betriebbaren, d.h. von einem Bediener geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, den Transportroboter 120a in Form eines Flurförderzeugs 120a und das Paar von Lastgabeln 124a,b relativ zu dem Warenobjekt 140 zu bewegen, um beispielsweise die Orientierung und/oder den Abstand zwischen dem Flurförderzeug 120a und der Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine oder mehrere Sensoreinheiten 130a zur Erfassung von Sensordaten umfassen, welche Informationen über die aktuelle Umgebung des Flurförderzeugs 120a enthalten. In einer Ausführungsform können die Sensoreinheiten 130a, eine Bilderfassungseinheit, insbesondere eine Kamera, einen Radar-Sensor und/oder einen Lidar-Sensor umfassen, welche ausgebildet sind, bei der Bewegung des Flurförderzeugs 120a eine Vielzahl von Bilddaten, Radardaten und/oder Lidardaten der Umgebung des Flurförderzeugs 120a zu erfassen.

Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Erfindungsgemäß umfasst das Flurförderzeug 120a ferner eine Datenverarbeitungsvorrichtung 123 (hierin auch als Steuereinheit 123 bezeichnet), welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 2 dargestellt, kann die Datenverarbeitungsvorrichtung bzw. Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

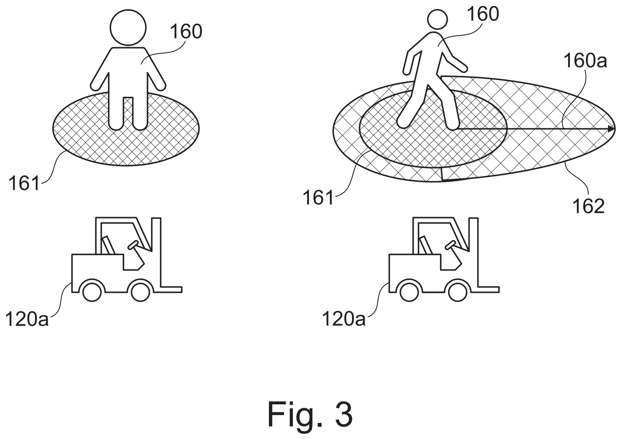

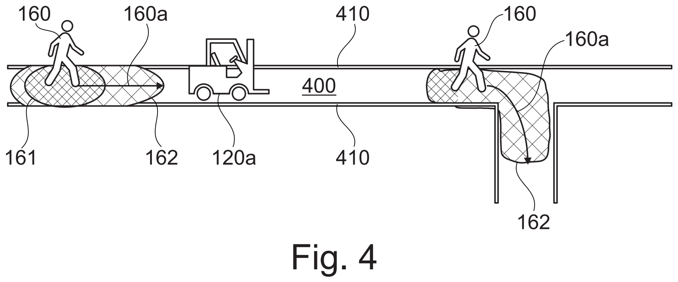

Im Folgenden werden Ausführungsformen der Datenverarbeitungsvorrichtung 110 in Form einer externen Servervorrichtung 110 unter weiterer Bezugnahme auf die Figuren 3 und 4 im Detail beschrieben. Wie der Fachmann jedoch erkennt, können zumindest einige der im Zusammenhang mit der externen Servervorrichtung 110 beschriebenen Ausführungsformen auch durch die in Form einer Steuereinheit 123 ausgebildeten Datenverarbeitungsvorrichtung 123 des Flurförderzeugs 120a implementiert werden.

Wie bereits vorstehend im Zusammenhang mit Figur 1 beschrieben, ist die Kommunikationsschnittstelle 113 der Datenverarbeitungsvorrichtung 110 ausgebildet, eine Vielzahl von Sensordaten zu empfangen, welche Informationen über die aktuelle Umgebung des Flurförderzeugs 120a enthalten. In einer Ausführungsformen können die Sensordaten insbesondere in der Umgebung des Flurförderzeugs 120a erfasste Bilddaten oder Radar- bzw. Lidar-Daten umfassen. Die Sensordaten können zumindest teilweise von der Sensoreinheit 130a des Flurförderzeugs 120a erfasst werden und an die Datenverarbeitungsvorrichtung 110 übertragen werden.

Die Prozessoreinrichtung 111 der Datenverarbeitungsvorrichtung 110 ist ausgebildet, auf der Grundlage der Vielzahl Sensordaten ein semantisches Modell bzw. eine semantische Karte der aktuellen Umgebung des Transportroboters 120a in Form des Flurförderzeugs 120a zu bestimmen. Mit anderen Worten: die Prozessoreinrichtung 111 ist ausgebildet, auf der Grundlage der Vielzahl von Sensordaten für eine Vielzahl von Objekten 120b, 140, 160, 170 in der Umgebung des Transportroboters 120a eine Position (beispielsweise für ein 2D semantisches Modell definiert durch eine x- und y-Position oder einen Abstand und einen Winkel und für ein 3D semantisches Modell definiert durch eine x-, y- und z-Position oder einen Abstand und einen ersten und zweiten Winkel) und eine Objektklasse einer Vielzahl von Objektklassen zu bestimmen. Wie in Figur 1 angedeutet, können die Vielzahl von Objekten in der Umgebung des Transportroboters 120a beispielsweise einen oder mehrere weitere Transportroboter 120b, Warenobjekte 140, eine oder mehrere Personen 160, und/oder Infrastrukturobjekte 170, beispielsweise Lagerwände und Regale zum Lagern der Warenobjekte 140, umfassen. Dabei können diese Objekte in der Umgebung des Transportroboters 120a mobile Objekte, d.h. sich dynamisch bewegende Objekte, wie die weiteren Transportroboter 120b oder die Personen 160, und immobile Objekte, d.h. ortsfeste Objekte, wie die Infrastrukturobjekte 170 umfassen.

In einer Ausführungsform kann die Prozessoreinrichtung 111 der Datenverarbeitungsvorrichtung 110 ausgebildet sein, ein trainierbares Machine-Learning Modell, ML-Modell, insbesondere ein trainierbares neuronalen Netzwerk zu implementieren, um auf der Grundlage der Vielzahl Sensordaten das semantische Modell, insbesondere die semantische Karte der aktuellen Umgebung des Transportroboters 120a zu bestimmen. Gemäß einer Ausführungsform kann die Prozessoreinrichtung 111 der Datenverarbeitungsvorrichtung 110 ferner ausgebildet sein, neben der Position und der Objektklasse ferner eine Orientierung des jeweiligen Objekts auf der Grundlage der Sensordaten zu bestimmen.

Wie dies nachstehend detaillierter beschrieben wird, ist die Prozessoreinrichtung 111 der Datenverarbeitungsvorrichtung 110 ferner ausgebildet, auf der Grundlage des semantischen Modells der Umgebung des Transportroboters 120a, d.h. der jeweiligen Position und der jeweiligen Objektklasse der Vielzahl von Objekten 120b, 140, 160, 170 in der Umgebung des Transportroboters 120a für das wenigstens eine mobile Objekt der Vielzahl von Objekten, beispielsweise für den weiteren Transportroboter 120b und/oder die Person 160, wenigstens eine Bewegungstrajektorie 128b, 160a vorherzusagen, d.h. eine wahrscheinliche zukünftige Bewegung des weiteren Transportroboters 120b und/oder der Person 160 zu bestimmen. Gemäß einer Ausführungsform kann die Vorhersage der Bewegungstrajektorie(n) 128b, 160a des wenigstens einen mobilen Objekts der Vielzahl von Objekten, beispielsweise des weiteren Transportroboters 120b und/oder der Person 160, neben der Position und der Objektklasse auf der Grundlage der Orientierung erfolgen.

Die Prozessoreinrichtung 111 der Datenverarbeitungsvorrichtung 110 ist ferner ausgebildet, auf der Grundlage der vorhergesagten Bewegungstrajektorie(n) 128b, 160a des wenigstens einen mobilen Objekts, beispielsweise des weiteren Transportroboters 120b und/oder der Person 160, eine neue Bewegungstrajektorie 128a des Transportroboters 120a zu generieren oder eine bestehende Bewegungstrajektorie 128a des Transportroboters 120a anzupassen.

Figur 3 ist eine schematische Darstellung eines Transportroboters 120a in Form eines Flurförderzeugs 120a mit einer stehenden Person 160 und einer sich bewegenden Person 160 in der Umgebung des Transportroboters 120a gemäß einer Ausführungsform. In einer Ausführungsform kann die Prozessoreinrichtung 111 der Datenverarbeitungsvorrichtung 110 ausgebildet sein, auf der Grundlage der Sensordaten die stehende Person 160 der Objektklasse "Person", insbesondere "Person stehend", und die sich bewegende Person 160 der Objektklasse "Person", insbesondere "Person in Bewegung", zuzuweisen. Wie dies in Figur 3 dargestellt ist, kann gemäß einer Ausführungsform für eines oder mehrere der Vielzahl von Objekten in der Umgebung des Transportroboters 120a ein Schutzraum definiert sein, der von der Objektklasse abhängt, d.h. zwei Objekte, welche zwei unterschiedlichen Objektlassen angehören, können unterschiedliche Schutzräume aufweisen. Dabei können sich die Schutzräume in Form und/oder Größe unterscheiden. In Figur 3 ist ein beispielhafter kreisförmiger Schutzraum 161 dargestellt, welcher für eine Person 160 mit der Objektklasse "Person" definiert ist.

In einer Ausführungsform ist die Prozessoreinrichtung 111 der Datenverarbeitungsvorrichtung 110 ausgebildet, die Bewegungstrajektorie 128a des Transportroboters 120a auf der Grundlage der vorhergesagten Bewegungstrajektorie(n) des wenigstens einen mobilen Objekts, beispielsweise der vorhergesagten Bewegungstrajektorie 128b des weiteren Transportroboters 120b und/oder der vorhergesagten Bewegungstrajektorie 160a der Person 160, derart zu generieren oder anzupassen, dass der Transportroboter 120a nicht in den Schutzraum 161 des wenigstens einen mobilen Objekts eindringt, wenn sich das wenigstens eine mobile Objekt gemäß der vorhergesagten Bewegungstrajektorie 128b, 160a bewegt und sich der Transportroboter 120a gemäß der generierten oder angepassten Bewegungstrajektorie 128a bewegt.

Insbesondere für immobile Objekte in der Umgebung des Transportroboters 120a kann der vorstehend beschriebene Schutzraum 161 oder alternativ ein Schutzabstand definiert sein, der von der für das entsprechende Objekt bestimmten Objektklasse abhängt. Bei dieser Ausführungsform ist die Prozessoreinrichtung 111 der Datenverarbeitungsvorrichtung 110 ausgebildet, die Bewegungstrajektorie 128a des Transportroboters 120a derart zu generieren oder anzupassen, dass, wenn sich der Transportroboter 120a gemäß der generierten oder angepassten Bewegungstrajektorie(n) 128a bewegt, der Abstand zwischen dem wenigstens einen immobilen Objekt und dem Transportroboter 120a nicht kleiner als der Schutzabstand ist.

Gemäß einer Ausführungsform ist die Prozessoreinrichtung 111 der Datenverarbeitungsvorrichtung 110 ausgebildet, für eine Vielzahl von zukünftigen Zeitpunkten an einer Vielzahl von Stellen, d.h. Punkten in der Umgebung des Transportroboters 120a eine jeweilige Aufenthaltswahrscheinlichkeit des wenigstens einen mobilen Objekts der Vielzahl von Objekten zu bestimmen, um für das wenigstens eine mobile Objekt der Vielzahl von Objekten die Bewegungstrajektorie(n) 128b, 160a vorherzusagen. Dies ist in Figur 3 für die sich bewegende Person 160 durch die ellipsenförmige Verteilung 162 der Aufenthaltswahrscheinlichkeiten (die sich zeitlich ändern kann) dargestellt.

**In** einer Ausführungsform ist die Prozessoreinrichtung 111 der Datenverarbeitungsvorrichtung 110 ausgebildet, für das wenigstens eine mobile Objekt der Vielzahl von Objekten ein mit der Objektklasse des wenigstens einen mobilen Objekts verknüpftes Objektverhaltensmodell einer Vielzahl von Objektverhaltensmodellen zu ermitteln und mit dem Objektverhaltensmodell für die Vielzahl von zukünftigen Zeitpunkten an der Vielzahl von Stellen, d.h. Punkten in der Umgebung des Transportroboters 120a die jeweilige Aufenthaltswahrscheinlichkeit des wenigstens einen mobilen Objekts der Vielzahl von Objekten zu bestimmen. Beispielsweise kann für die sich bewegende Person 160 in Figur 3 mit der Objektklasse "Person", insbesondere "Person in Bewegung", ein Objektverhaltensmodell verknüpft sein, auf deren Grundlage die Prozessoreinrichtung 111 die Aufenthaltswahrscheinlichkeitsverteilung(en) 162 bestimmen kann. In einer Ausführungsform kann das mit einer jeweiligen Objektklasse verknüpfte Objektverhaltensmodell ein probabilistisches Objektverhaltensmodell sein. Gemäß einer Ausführungsform kann das mit einer jeweiligen Objektklasse verknüpfte Objektverhaltensmodell auf einem trainierbaren ML-Modell, insbesondere auf einem trainierbaren neuronalen Netzwerk basieren.

In einer Ausführungsform ist die Prozessoreinrichtung 111 der Datenverarbeitungsvorrichtung 110 ausgebildet, auf der Grundlage der vorhergesagten Bewegungstrajektorie(n) 128b, 160a des wenigstens einen mobilen Objekts 120b, 160 die Bewegungstrajektorie 128a des Transportroboters 120a unter Verwendung einer Kostenfunktion zu generieren oder anzupassen, wobei die Kostenfunktion auf den Aufenthaltswahrscheinlichkeitsverteilungen 162 des wenigstens einen mobilen Objekts 120b, 160 in der Umgebung des Transportroboters 120a basiert. Gemäß einer Ausführungsform ist die Prozessoreinrichtung 111 ausgebildet, die Aufenthaltswahrscheinlichkeitsverteilungen von mehreren mobilen Objekten in der Umgebung des Transportroboters 120a zu kombinieren, insbesondere durch eine punktweise Multiplikation der jeweiligen Aufenthaltswahrscheinlichkeiten.

Es ist bekannt, bei Planungsverfahren Belegungskosten zu verwenden, die räumlichen Punkten einen Kostenwert zuweisen, über den für einen möglichen Pfad, d.h. eine Bewegungstrajektorie ein pfad-bezogener Kostenwert entsteht, der sich aus der Summe der punktbezogenen Kosten ergibt. Gemäß einer Ausführungsform kann für die Überführung der kombinierten "Raumbedarfe" in ein Kostenmodell erfindungsgemäß vorgesehen sein, dass die kombinierten Raumbedarfe direkt die punktbezogenen Belegungskosten ergeben.

Bei dem bekannten Robotic-Framework ROS2 ist der Navigation-Stack derart ausgebildet, dass die Kosten (die in einer 2D-Costmap repräsentiert sein können) mit einem 8-bit Kostenwert belegt sind, der sich qualitiativ in vier Bereiche aufteilt: "definitely in collision"; "possibly in collision"; "definitely not in collision"; und "freespace". Gemäß einer Ausführungsform ist die Prozessoreinrichtung 111 der Datenverarbeitungsvorrichtung 110 ausgebildet, zur Pfadplanung, d.h. zur Erzeugung einer neuen Bewegungstrajektorie 128a des Transportroboters 120a oder zur Anpassung einer bestehenden Bewegungstrajektorie 128a des Transportroboters 120a, einen Navigation-Stack gemäß dem Robotic-Framework ROS2 zu implementieren, und zwar mit einem Planer, der eine Kollisionserkennung umfasst, um kollisionsfreie Pfade, d.h. Bewegungstrajektorien generieren zu können. Dabei kann gemäß einer Ausführungsform die Kollisionsinformation aus einer Costmap stammen, wenn der Kostenwert oberhalb einer Collision-Grenze liegt. Hierbei bestehen die Optionen "in collision" und "not in collision", wobei ein "in collision"-Bereich für immobile Objekte und "not in collision" für bevorzugte Fahrräume (z. B. Fahrstreifen) definiert sein kann. Hierdurch ist es beispielsweise möglich, "Rechtsverkehr" über Kosten in "not in collision" zu bevorzugen. Beispielsweise kann über eine "Kosten-Badewanne" auf dem rechten Fahrstreifen der von der Prozessoreinrichtung 111 implementierte Planer dazu veranlasst werden, den Pfad, d.h. die Bewegungstrajektorie 128a hierentlang zu planen, so dass beispielsweise der linke Fahrstreifen nur verwendet wird, wenn der rechte Fahrstreifen blockiert ist.

In einer Ausführungsform ist die Prozessoreinrichtung 111 ausgebildet, auf der Grundlage der Objektklasse für das wenigstens eine mobile Objekt, beispielsweise für den weiteren Transportroboter 120b und/oder die sich bewegende Person 160, einen oder mehrere Point-of-Interests, POls, zu bestimmen, um für das wenigstens eine mobile Objekt die Bewegungstrajektorie(n) 128b vorherzusagen. Beispielsweise könnte für den weiteren Transportroboter 120b eine Auslagerungsstelle und/oder eine Einlagerungsstelle von Warenobjekten 140 ein POI sein, während für die sich bewegende Person 160 ein Eingang und/oder ein Ausgang ein POI sein könnte.

Für den bereits vorstehend beschriebenen Fall, dass das mobile Objekt der weitere Transportroboter 120b ist, kann die Prozessoreinrichtung 111 der Datenverarbeitungsvorrichtung 110 ausgebildet sein, für den weiteren Transportroboter 120b einen Transportauftrag zu ermitteln, beispielsweise über ein Warenmanagementsystem, WMS, um für den weiteren Transportroboter 120b die Bewegungstrajektorie 128b vorherzusagen.

Wie bereits vorstehend im Zusammenhang mit Figur 3 beschrieben, ist gemäß einer Ausführungsform die Prozessoreinrichtung 111 der Datenverarbeitungsvorrichtung 110 ausgebildet, für die Objekte in der Umgebung des Transportroboters ein mit der Objektklasse des jeweiligen Objekts verknüpftes Objektverhaltensmodell zu ermitteln. Bei der in Figur 3 dargestellten Person kann das Objektverhaltensmodell "Person" bzw. "Mensch" eine kreisförmige Kontur 161 umfassen, die um eine bewegungsrichtungssensitive Ellipse 162 ergänzt ist, die den prädizierten Bewegungsraum der Person 160, d.h. die vorstehend beschriebene Aufenthaltswahrscheinlichkeitsverteilung 162 repräsentiert. Diese kann kostenbewertet sein, wobei die Kosten mit größerem Abstand zur Person 160 abfallen. Da der Prädiktionshorizont mit zunehmendem Abstand sich vergrößert, sinkt somit auch im Allgemeinen die Qualität der Prädiktion, so dass die Aufenthaltswahrscheinlichkeit abnimmt. Eine Anreicherung durch weitere Informationen ist denkbar. Ist beispielsweise das Ziel der gehenden Person 160 bekannt (beispielsweise einer der vorstehend beschriebenen POls), so kann die Prädiktionsqualität verbessert werden. Denkbar ist es, dass Ziel aus der Blickrichtung bzw. Kopf- und Körperorientierung oder zusätzlichen Prozessinformationen (ergibt sich aus der Aufgabe der Person) abzuleiten. Des Weiteren ist der Einbezug von mehreren Personen denkbar, z.B. einer Gruppe von Personen, die sich unterhalten. Hier ist es zielführend, wenn der Transportroboter 120a die Gruppe als ein Hindernis erkennt und nicht versucht, zwischen den Gruppenteilnehmern sich hindurchzuzwängen.

Das mit der Objektklasse "Transportroboter" verknüpfte Objektverhaltensmodell kann ähnlich wie das vorstehend beschriebene Objektverhaltensmodell ausgestaltet sein, welches mit der Objektklasse "Person" bzw. "Mensch" verknüpft sein. Allerdings sollte aufgrund der in der Regel höheren Geschwindigkeiten eines Transportroboters dessen Schutzraum 161 entsprechend größer ausgebildet sein (beispielsweise größerer Radius des kreisförmigen Schutzraums 161). Ein ähnliches Objektverhaltensmodell kann auch für manuelle Fahrzeuge verwendet werden.

Figur 4 zeigt eine schematische Darstellung mit einer sich gerade bewegenden Person 160 und einer sich entlang einer Abzweigung bewegenden Person 160 in der Umgebung des Transportroboters 120a gemäß einer Ausführungsform. Bei der sich gerade bewegenden Person verläuft die von der Prozessoreinrichtung 111 (bis zu einem Zeithorizont) aufgrund der Aufenthaltswahrscheinlichkeiten 162 vorhergesagte Bewegungstrajektorie 160a der sich gerade bewegenden Person entlang einer Fahrspur 400. Dabei kann wie in Figur 4 dargestellt, der ellipsenförmige Bereich der Aufenthaltswahrscheinlichkeiten 162 durch eine Begrenzung 410 der Fahrspur 400 eingeschränkt sein. Bei der sich entlang einer Abzweigung bewegenden Person 160 verläuft die von der Prozessoreinrichtung 111 aufgrund der Aufenthaltswahrscheinlichkeiten 162 vorhergesagte Bewegungstrajektorie 160a entlang der Abzweigung der Fahrspur 400.

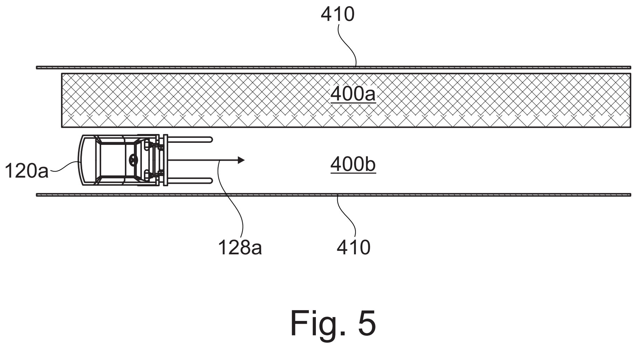

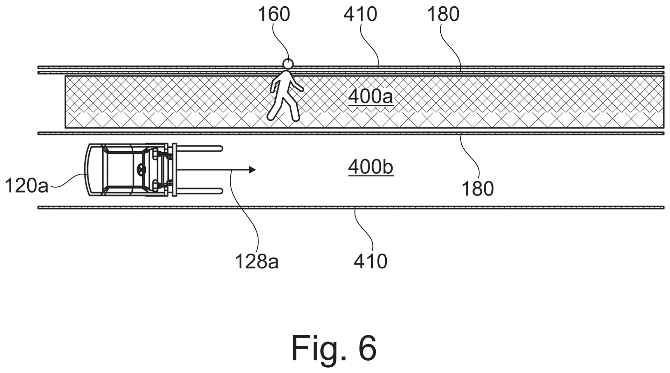

Figur 5 zeigt eine schematische Darstellung einer durch eine Begrenzung 410 definierten Fahrspur 400 mit einer Schutzzone 400a und einer freien Zone 400b in der Umgebung eines Transportroboters 120a gemäß einer Ausführungsform. Figur 6 zeigt eine schematische Darstellung einer durch eine Begrenzung 410 definierten Fahrspur 400 mit einer durch eine Bodenmarkierung 180 definierten Schutzzone 400a und einer freien Zone 400b in der Umgebung des Transportroboters 120a gemäß einer Ausführungsform. Die Bodenmarkierung 180, beispielsweise in Form von Leuchtstreifen 180 auf dem Boden, kann eines der Vielzahl von Objekten in der Umgebung des Transportroboters 120a sein, die von den Sensoren 130a,b erfasst werden und für die aufgrund der Vielzahl von Sensordaten eine Position und eine Objektklasse bestimmt wird. Gemäß einer Ausführungsform kann das Markierungsobjekt 180 in Form der Bodenmarkierung 180 eine Schutzzone bzw. einen Schutzbereich 410a der Fahrspur 410 definieren, so dass sich der Transportroboter 120a im Allgemeinen in der freien Zone 410b der Fahrspur 410 bewegen kann, aber nie oder nur unter ganz bestimmen Bedingungen in der Schutzzone 410a bewegen kann. Wie der Fachmann erkennt, kann neben der Definition von Schutzzonen 410a mittels des Markierungsobjekts 180 in Form der Bodenmarkierung 180 der Aufwand der Kartographierung und Nachbearbeitung, d.h. der Erstellung des semantischen Umgebungsmodells reduziert werden.

Bei den in den Figuren 5 und 6 dargestellten Ausführungsformen bietet die Schutzzone 400a einen Schutzbereich für die Personen 160, in dem der Transportroboter 120a nicht erlaubt ist. Dies kann durch Kosten in der Kostenfunktion realisiert werden, die mit zunehmendem Abstand von der freien Zone 400b steigen. Somit kann es für den Transportroboter 120a zwar möglich sein, zumindest ein wenig in die Schutzzone 400a hineinzufahren (beispielsweise aufgrund eines Ausweichmanövers), was aber mit erhöhten Kosten verbunden ist. Somit ist diese Planungsoption für den von der Prozessoreinrichtung 111 implementierten Planer wenig attraktiv und wird somit nur im Falle von Blockaden verwenden werden.

## Patentansprüche

1. Datenverarbeitungsvorrichtung (110; 123) zum Steuern eines Transportroboters (120a), insbesondere Flurförderzeugs (120a), wobei die Datenverarbeitungsvorrichtung (110; 123) umfasst:
eine Kommunikationsschnittstelle (113; 123b), welche ausgebildet ist, eine Vielzahl von Sensordaten zu empfangen, welche Informationen über die aktuelle Umgebung des Transportroboters (120a) enthalten; und
eine Prozessoreinrichtung (111; 123a), welche ausgebildet ist, auf der Grundlage der Vielzahl von Sensordaten für eine Vielzahl von Objekten (120b, 140, 160, 170, 180) in der Umgebung des Transportroboters (120a) eine Position und eine Objektklasse zu bestimmen, wobei die Vielzahl von Objekten (120b, 140, 160, 170, 180) wenigstens ein mobiles Objekt umfasst, und auf der Grundlage der jeweiligen Position und der jeweiligen Objektklasse der Vielzahl von Objekten (120b, 140, 160, 170, 180) in der Umgebung des Transportroboters (120a) für das wenigstens eine mobile Objekt der Vielzahl von Objekten (120b, 140, 160, 170, 180) eine Bewegungstrajektorie (128b, 160a) vorherzusagen,
wobei die Prozessoreinrichtung (111; 123a) ferner ausgebildet ist, auf der Grundlage der vorhergesagten Bewegungstrajektorie (128b, 160a) des wenigstens einen mobilen Objekts eine Bewegungstrajektorie (128a) des Transportroboters (120a) zu generieren oder anzupassen.

2. Datenverarbeitungsvorrichtung (110; 123) nach Anspruch 1, wobei für das wenigstens eine mobile Objekt der Vielzahl von Objekten (120b, 140, 160, 170, 180) ein Schutzraum (161) definiert ist, der von der Objektklasse abhängt, und wobei die Prozessoreinrichtung (111; 123a) ausgebildet ist, die Bewegungstrajektorie (128a) des Transportroboters (120a) auf der Grundlage der vorhergesagten Bewegungstrajektorie (128b, 160a) des wenigstens einen mobilen Objekts derart zu generieren oder anzupassen, dass der Transportroboter (120a) nicht in den Schutzraum (161) des wenigstens einen mobilen Objekts eindringt, wenn sich das wenigstens eine mobile Objekt gemäß der vorhergesagten Bewegungstrajektorie (128b, 160a) bewegt und sich der Transportroboter (120a) gemäß der generierten oder angepassten Bewegungstrajektorie (128a) bewegt.

3. Datenverarbeitungsvorrichtung (110; 123) nach Anspruch 1 oder 2, wobei die Prozessoreinrichtung (111; 123a) ausgebildet ist, für eine Vielzahl von Zeitpunkten an einer Vielzahl von Stellen in der Umgebung des Transportroboters (120a) eine jeweilige Aufenthaltswahrscheinlichkeit des wenigstens einen mobilen Objekts der Vielzahl von Objekten (120b, 140, 160, 170, 180) zu bestimmen, um für das wenigstens eine mobile Objekt der Vielzahl von Objekten (120b, 140, 160, 170, 180) die Bewegungstrajektorie (128b, 160a) vorherzusagen.

4. Datenverarbeitungsvorrichtung (110; 123) nach Anspruch 3, wobei die Prozessoreinrichtung (111; 123a) ausgebildet ist, für das wenigstens eine mobile Objekt der Vielzahl von Objekten (120b, 140, 160, 170, 180) ein mit der Objektklasse des wenigstens einen mobilen Objekts verknüpftes Objektverhaltensmodell zu ermitteln und mit dem Objektverhaltensmodell für die Vielzahl von Zeitpunkten an der Vielzahl von Stellen in der Umgebung des Transportroboters (120a) die jeweilige Aufenthaltswahrscheinlichkeit des wenigstens einen mobilen Objekts der Vielzahl von Objekten (120b, 140, 160, 170, 180) zu bestimmen.

5. Datenverarbeitungsvorrichtung (110; 123) nach Anspruch 3 oder 4, wobei die Prozessoreinrichtung (111; 123a) ausgebildet ist, auf der Grundlage der vorhergesagten Bewegungstrajektorie (128b, 160a) des wenigstens einen mobilen Objekts die Bewegungstrajektorie (128a) des Transportroboters (120a) unter Verwendung einer Kostenfunktion zu generieren oder anzupassen, wobei die Kostenfunktion auf den Aufenthaltswahrscheinlichkeiten des wenigstens einen mobilen Objekts der Vielzahl von Objekten (120b, 140, 160, 170, 180) für die Vielzahl von Zeitpunkten an der Vielzahl von Stellen in der Umgebung des Transportroboters (120a) basiert.

6. Datenverarbeitungsvorrichtung (110; 123) nach einem der vorstehenden Ansprüche, wobei die Vielzahl von Objekten (120b, 140, 160, 170, 180) wenigstens ein immobiles Objekt umfasst und wobei für das wenigstens eine immobile Objekt ein Schutzabstand definiert ist, der von der Objektklasse abhängt, und wobei die Prozessoreinrichtung (111; 123a) ausgebildet ist, die Bewegungstrajektorie (128a) des Transportroboters (120a) derart zu generieren oder anzupassen, dass, wenn sich der Transportroboter (120a) gemäß der generierten oder angepassten Bewegungstrajektorie (128a) bewegt, der Abstand zwischen dem wenigstens einen immobilen Objekt und dem Transportroboter (120a) nicht kleiner als der Schutzabstand ist.

7. Datenverarbeitungsvorrichtung (100; 123) nach einem der vorstehenden Ansprüche, wobei die Prozessoreinrichtung (111; 123a) ausgebildet ist, auf der Grundlage der Vielzahl von Sensordaten für das wenigstens eine mobile Objekt der Vielzahl von Objekten (120b, 140, 160, 170, 180) in der Umgebung des Transportroboters (120a) ferner eine Orientierung des wenigstens einen mobilen Objekts der Vielzahl von Objekten (120b, 140, 160, 170, 180) zu bestimmen, und wobei die Prozessoreinrichtung (111; 123a) ausgebildet ist, auf der Grundlage der jeweiligen Position, der jeweiligen Orientierung und der jeweiligen Objektklasse der Vielzahl von Objekten (120b, 140, 160, 170, 180) in der Umgebung des Transportroboters (120a) für das wenigstens eine mobile Objekt der Vielzahl von Objekten (120b, 140, 160, 170, 180) die Bewegungstrajektorie (128b, 160a) vorherzusagen.

8. Datenverarbeitungsvorrichtung (100; 123) nach einem der vorstehenden Ansprüche, wobei die Prozessoreinrichtung (111; 123a) ausgebildet ist, auf der Grundlage der Objektklasse für das wenigstens eine mobile Objekt der Vielzahl von Objekten (120b, 140, 160, 170, 180) einen oder mehrere Point-of-Interests, POls, zu bestimmen, um für das wenigstens eine mobile Objekt der Vielzahl von Objekten (120b, 140, 160, 170, 180) die Bewegungstrajektorie (128b, 160a) vorherzusagen.

9. Datenverarbeitungsvorrichtung (100; 123) nach einem der vorstehenden Ansprüche, wobei das wenigstens eine mobile Objekt der Vielzahl von Objekten (120b, 140, 160, 170, 180) ein weiterer Transportroboter (120b) ist und wobei die Prozessoreinrichtung (111; 123a) ausgebildet ist, für den weiteren Transportroboter (120b) einen Transportauftrag zu ermitteln, um für den weiteren Transportroboter (120b) die Bewegungstrajektorie (128b) vorherzusagen.

10. Datenverarbeitungsvorrichtung (100; 123) nach einem der vorstehenden Ansprüche, wobei die Vielzahl von Objekten (120b, 140, 160, 170, 180) in der Umgebung des Transportroboters (120a) wenigstens ein Markierungsobjekt (180) umfasst, wobei das wenigstens eine Markierungsobjekt (180) eine oder mehrere Schutzzonen (400a) in der Umgebung des Transportroboters (120a) definiert.

11. Datenverarbeitungsvorrichtung (110) nach einem der vorstehenden Ansprüche, wobei die Kommunikationsschnittstelle (113) ferner ausgebildet ist, die generierte oder angepasste Bewegungstrajektorie (128a) des Transportroboters (120a) repräsentierende Informationen oder ein auf der generierten oder angepassten Bewegungstrajektorie (128a) des Transportroboters (120a) basierendes Steuersignal zum Steuern des Transportroboters (120a) gemäß der generierten oder angepassten Bewegungstrajektorie (128a) an den Transportroboter (120a) zu übertragen.

12. Transportroboter (120a), wobei der Transportroboter (120a) eine Datenverarbeitungsvorrichtung (123) nach einem der Ansprüche 1 bis 11 umfasst.

13. Transportroboter (120a) nach Anspruch 12, wobei der Transportroboter (120a) als Flurförderzeug (120a), insbesondere als Gabelstapler (120a), zum Transport von Warenobjekten (140) ausgebildet ist.

14. System (100) zum Betreiben einer Vielzahl von Transportrobotern (120a,b), wobei das System (100) umfasst:
eine Vielzahl von Transportrobotern (120a,b); und
eine Datenverarbeitungsvorrichtung (110) nach einem der Ansprüche 1 bis 11 zum Steuern der Vielzahl von Transportrobotern (120a,b).

15. System (100) nach Anspruch 14, wobei die Vielzahl von Transportrobotern (120a,b) eine Vielzahl von Sensoreinheiten (130a) umfassen, welche ausgebildet sind, zumindest einen Teil der Vielzahl von Sensordaten zu erfassen.
